(19) Europäisches Patentamt
European Patent Office
Office européen des brevets

(11) **EP 4 306 342 A1**

(12) **EUROPEAN PATENT APPLICATION**

(43) Date of publication:
**17.01.2024 Bulletin 2024/03**

(21) Application number: **23182787.4**

(22) Date of filing: **30.06.2023**

(51) International Patent Classification (IPC):
**B60G 17/016** (2006.01)    **B60G 17/0195** (2006.01)
**B60D 1/32** (2006.01)    **B60T 8/17** (2006.01)
**B60W 30/02** (2012.01)

(52) Cooperative Patent Classification (CPC):
**B60G 17/0162; B60D 1/30; B60G 17/0195;
B60T 8/1708;** B60G 2300/04; B60G 2300/50;
B60G 2400/0523; B60G 2400/204; B60G 2400/41;
B60G 2400/972; B60G 2500/10; B60T 2230/06;
B60T 2260/06; B60W 30/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.07.2022 US 202217861810**

(71) Applicant: **DRiV Automotive Inc.
Northville, MI 48168 (US)**

(72) Inventors:
• **DHAENS, Miguel
Northville, MI 48168 (US)**

• **MAZZILLI, Victor
Northville, MI 48168 (US)**
• **RINI, Gabriele
Northville, MI 48168 (US)**
• **GRUBER, Patrick
Northville, MI 48168 (US)**
• **SORNIOTTI, Aldo
Northville, MI 48168 (US)**
• **VAN AALST, Sebastiaan
Northville, MI 48168 (US)**

(74) Representative: **Michalski Hüttermann & Partner
Patentanwälte mbB
Kaistraße 16A
40221 Düsseldorf (DE)**

(54) **VEHICLE CONTROL SYSTEMS AND METHODS BASED ON TRAILER HITCH ANGLE**

(57) A trailer sway control system for a vehicle includes: a front left active suspension actuator; a front right active suspension actuator; a rear left active suspension actuator; a rear right active suspension actuator; an actuator control module configured to: based on a hitch angle between (a) a first longitudinal axis of a trailer hitched to the vehicle and (b) a second longitudinal axis of the vehicle, determine target vertical forces for the front left active suspension actuator, the front right active suspension actuator, the rear left active suspension actuator, and the rear right active suspension actuator, respectively; and selectively adjust the front left active suspension actuator, the front right active suspension actuator, the rear left active suspension actuator, and the rear right active suspension actuator based on the target vertical forces, respectively.

**FIG. 10**

Processed by Luminess, 75001 PARIS (FR)

EP 4 306 342 A1

**Description**

FIELD

The present disclosure relates to control systems and methods of vehicles and more particularly to vehicle control based on an angle between a longitudinal axis of a trailer and a longitudinal axis of the vehicle.

BACKGROUND

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Various different types of vehicles are available. For example, coupes, sedans, convertibles, trucks, station wagons, and utility vehicles are available. There are multiple different types of utility vehicles, such as sport utility vehicles (SUVs), crossover utility vehicles, etc.

Some types of vehicles are designed to tow trailers. For example, trucks and utility vehicles may be used to tow trailers. Various different types of trailers are available. Examples of trailers include cargo trailers, trailers for vehicles (e.g., land based vehicles, watercraft, etc.), travel trailers, and other types of trailers.

SUMMARY

In a feature, a trailer sway control system for a vehicle includes: a front left active suspension actuator associated with a front left wheel of the vehicle; a front right active suspension actuator associated with a front right wheel of the vehicle; a rear left active suspension actuator associated with a rear left wheel of the vehicle; a rear right active suspension actuator associated with a rear right wheel of the vehicle; an actuator control module configured to: based on a hitch angle between (a) a first longitudinal axis of a trailer hitched to the vehicle and (b) a second longitudinal axis of the vehicle, determine target vertical forces for the front left active suspension actuator, the front right active suspension actuator, the rear left active suspension actuator, and the rear right active suspension actuator, respectively; and selectively adjust the front left active suspension actuator, the front right active suspension actuator, the rear left active suspension actuator, and the rear right active suspension actuator based on the target vertical forces, respectively.

In further features, the actuator control module is configured to determine the target vertical forces based on minimizing a difference between the hitch angle and a reference hitch angle.

In further features, a reference hitch angle module is configured to set the reference hitch angle based on a steering angle of the vehicle.

In further features, the actuator control module is configured to determine the target vertical forces further based on a yaw rate of the vehicle.

In further features, the actuator control module is configured to determine the target vertical forces based on minimizing a difference between the yaw rate and a reference yaw rate.

In further features, a reference yaw rate module is configured to set the reference yaw rate based on a steering angle of the vehicle.

In further features, the reference yaw rate module is configured to set the reference yaw rate further based on a vehicle speed.

In further features: a front left electric motor is configured to output torque to a front left wheel of the vehicle; a front right electric motor is configured to output torque to a front right wheel of the vehicle; a rear left electric motor is configured to output torque to a rear left wheel of the vehicle; a rear right electric motor is configured to output torque to a rear right wheel of the vehicle; and a wheel control module is configured to: based on the hitch angle, determine target torque outputs of the front left electric motor, the front right electric motor, the rear left electric motor, and the rear right electric motor, respectively; and selectively adjust the front left electric motor, the front right electric motor, the rear left electric motor, and the rear right electric motor based on the target torque outputs, respectively.

In further features, the wheel control module is configured to determine the target torque outputs further based on the target vertical forces.

In further features, the actuator control module is configured to determine the target vertical forces further based on the target torque outputs.

In further features: a front electric motor is configured to output torque to front wheels of the vehicle; a rear electric motor is configured to output torque to front wheels of the vehicle; and a wheel control module configured to: based on the hitch angle, determine target torque outputs of the front and rear electric motors, respectively; and selectively adjust the front and rear electric motors based on the target torque outputs, respectively.

In further features: an electric motor is configured to output torque two or more wheels of the vehicle; and a wheel control module configured to: based on the hitch angle, determine a target torque of the electric motor; and selectively adjust the electric motor based on the target torque.

In a feature, a trailer sway control method for a vehicle includes: based on a hitch angle between (a) a first longitudinal axis of a trailer hitched to the vehicle and (b) a second longitudinal axis of the vehicle, determining target vertical forces for a front left active suspension actuator, a front right active suspension actuator, a rear left active suspension actuator, and a rear right active suspension actuator, respectively, of the vehicle; and selectively adjusting the front left active suspension actuator, the front right active suspension actuator, the rear left active suspension actuator, and the rear right active suspension actuator based on the target vertical forces, respectively, the front right active suspension actuator associated with a front right wheel of the vehicle, the front left active suspension actuator associated with a front left wheel of the vehicle, the rear left active suspension actuator associated with a rear left wheel of the vehicle, and the rear right active suspension actuator associated with a rear right wheel of the vehicle; and selectively adjusting the front left active suspension actuator, the front right active suspension actuator, the rear left active suspension actuator, and the rear right active suspension actuator.

In further features, determining the target vertical forces includes determining the target vertical forces based on minimizing a difference between the hitch angle and a reference hitch angle.

In further features, the method further includes setting the reference hitch angle based on a steering angle of the vehicle.

In further features, determining the target vertical forces includes determining the target vertical forces further based on a yaw rate of the vehicle.

In further features, determining the target vertical forces includes determining the target vertical forces based on minimizing a difference between the yaw rate and a reference yaw rate.

In further features, the method further includes setting the reference yaw rate based on a steering angle of the vehicle.

In further features, setting the reference yaw rate includes setting the reference yaw rate further based on a vehicle speed.

In further features, the method further includes: based on the hitch angle, determine a target torque output of an electric motor configured to output torque two or more wheels of the vehicle; and selectively adjusting the electric motor based on the target torque.

Further areas of applicability of the present disclosure will become apparent from the detailed description, the claims and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings, wherein:

FIG. 1 is top view of a model including a vehicle and a trailer;

FIG. 2 is a side view of an example model of the trailer including various parameters;

FIG. 3 is a functional block diagram of example components of the vehicle;

FIGS. 4-9 are functional block diagrams of example implementations of a trailer sway control system; and

FIG. 10 is a flowchart depicting an example method of controlling one or more vehicle actuators based on hitch angle of the trailer.

In the drawings, reference numbers may be reused to identify similar and/or identical elements.

DETAILED DESCRIPTION

Vehicles may be used to tow trailers. A vehicle may include one or more trailer sway mitigation modules that selectively adjust one or more operating parameters of the vehicle to decrease sway of a trailer when swaying occurs.

The present application involves control of at least one of suspension actuators of the vehicle and wheel torques of the vehicle based on a hitch angle of the trailer. The hitch angle of the trailer may refer to an angle between a longitudinal axis of the trailer and a longitudinal axis of the vehicle. The control enhances cornering stability of a vehicle towing a trailer and minimizes sway of the trailer.

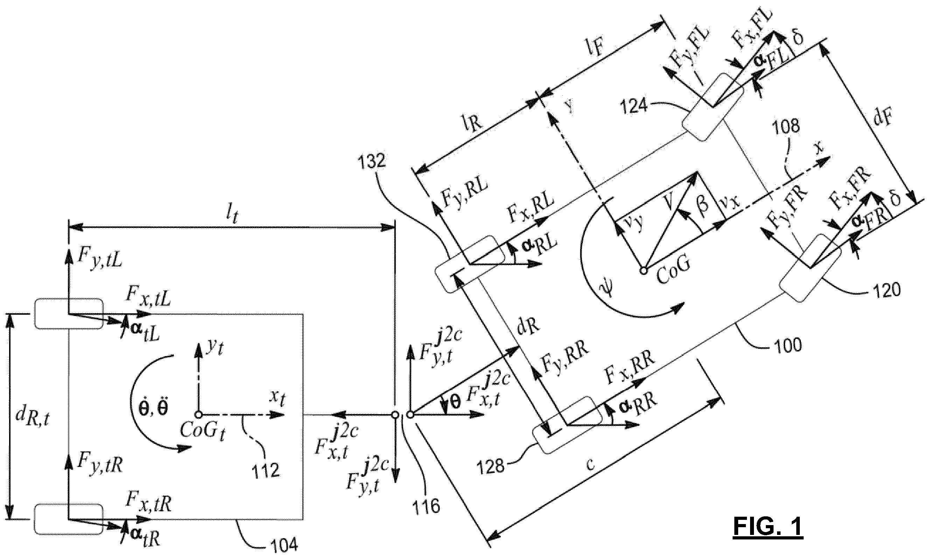

FIG. 1 is top view of a model including a vehicle 100 and a trailer 104.CoG represents the center of gravity of a body. Longitudinal axes of the vehicle 100 and the trailer 104 are illustrated by 108 and 112, respectively. The trailer 104 is hitched to the vehicle 100 at trailer hitch 116. A hitch angle $\theta$ represents the angle between the longitudinal axes of the vehicle 100 and the trailer 104 (between 108 and 112).

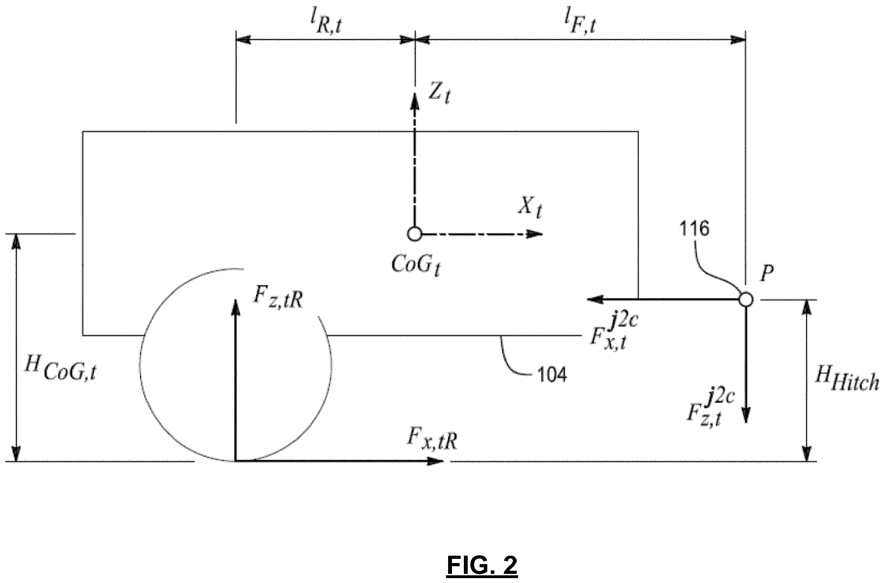

The vehicle 100 includes front right and left wheels 120 and 124, respectively. The vehicle 100 also includes rear right and left wheels 128 and 132, respectively. The front wheels 120 and 124 are turnable left and right to enable vehicle turning. In various vehicles, the rear wheels 128 and 132 may also be turnable left and right or may be fixed parallel to the longitudinal axis 108 of the vehicle 100. The trailer 104 includes two or more wheels, such as illustrated. Parameters of the trailer 104 are denoted with a subscript t. FIG. 2 is a side view of an example model of the trailer 104 including various parameters.

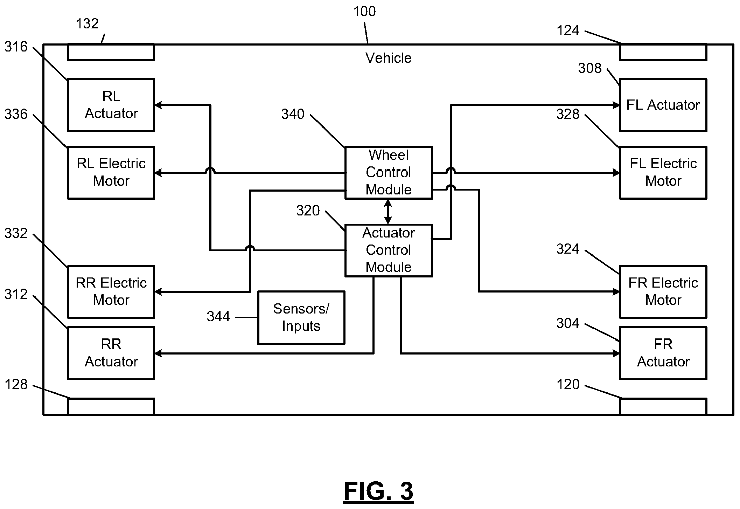

FIG. 3 is a functional block diagram of example components of the vehicle 100. As discussed above, the vehicle 100 includes the front right and left wheels 120 and 124 and the rear right and left wheels 128 and 132. The vehicle 100 may include additional wheels, such as in the example of dual rear wheel vehicles.

A front right (FR) suspension actuator 304 is an active suspension actuator and damps vertical motion near a FR corner of the vehicle 100, such as at the front right wheel 120. A front left (FL) suspension actuator 308 is an active suspension actuator and damps vertical motion near a FL corner of the vehicle 100, such as at the front left wheel 124. A rear right (RR) suspension actuator 312 is an active suspension actuator and damps vertical motion near a RR corner of the vehicle 100, such as at the rear right wheel 128. A rear left (RL) suspension actuator 316 is an active suspension actuator and damps vertical motion near a RL corner of the vehicle 100, such as at the rear left wheel 132. An actuator control module 320 controls damping forces ($F_{s,FR}$, $F_{s,FL}$, $F_{s,RR}$, $F_{s,RL}$) of the suspension actuators 304, 308, 312, and 316, respectively, based on the hitch angle, as discussed further below. The actuator control module 320 may control, for example, a pressure of a hydraulic fluid within one or more portions of a suspension actuator, control electric power (e.g., voltage, current) applied to a suspension actuator, or control the damping force of the suspension actuator in another suitable manner.

The vehicle 100 includes one or more torque producing devices that output torque to two or more of the wheels 120-132. For example, the vehicle 100 may include a FR electric motor 324 that outputs torque to the FR wheel 120 and a FL electric motor 328 that outputs torque to the FL wheel 124. The vehicle 100 may also include a RR electric motor 332 that outputs torque to the RR wheel 128 and a RL electric motor 336 that outputs torque to the RL wheel 132. Other motor configurations are also possible, such as one electric motor that outputs torque to the front wheels 120 and 124 and/or one electric motor that outputs torque to the rear wheels 128 and 132. Electric motors can also apply negative torque to slow/brake the vehicle 100. The vehicle 100 also includes friction brakes at each wheel that can be applied to slow that wheel. A wheel control module 340 controls the torque at each wheel. For example, the wheel control module 340 may control the torque at a wheel via controlling an electric motor and/or controlling application of the friction brake at that wheel. Additionally or alternatively to the actuator control module 320 controlling the damping forces based on the hitch angle, the wheel control module 340 may control the torques ($\tau_{m,FR}$, $\tau_{m,FL}$, $\tau_{m,RR}$, $\tau_{m,RL}$) at the wheels, respectively, based on the hitch angle.

The vehicle 100 includes various sensors and other input devices collectively illustrated by 344. Examples of sensors include but are not limited to an accelerator pedal position (APP) sensor, a brake pedal position (BPP) sensor, and other types of sensors. Examples of other types of input devices include, for example, cameras, radar sensors, ultrasonic sensors, and other types of sensors. As an example of a camera, a rear backup camera may be included. Images from the rear backup camera may be used to determine the hitch angle of the trailer 104. In various implementations, the hitch angle may be determined, measured, or estimated in another suitable manner.

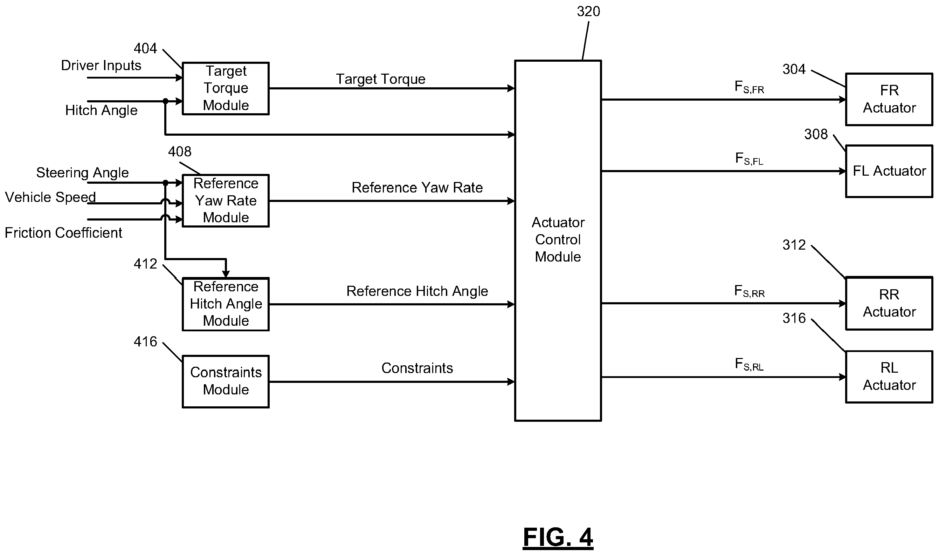

FIG. 4 is a functional block diagram of an example implementation of a trailer sway control system. A target torque module 404 determines a target torque ($\tau_{m,tot,d}$) based on one or more driver inputs and the hitch angle of the trailer 104. The target torque module 404 may determine the target wheel torque, for example, using one or more equations and/or lookup tables that relate the driver inputs and the hitch angle to target torques. The driver inputs may include, for example, the APP measured using the APP sensor and the BPP measured using the BPP sensor.

A reference yaw rate module 408 determines a reference (target) yaw rate of the vehicle based on one or more inputs, such as steering angle $\delta$, vehicle speed V, and tire-road coefficient of friction $\mu$. The reference yaw rate module 408 may determine the reference yaw rate using one or more equations and/or lookup tables that relate steering angles, vehicle speeds, and coefficients to reference yaw rates. The steering angle may be determined, for example, based on measurements from a steering wheel angle (SWA) sensor, such as using one or more lookup tables or equations that relate SWAs to steering angles. The vehicle speed may be measured or estimated using one or more sensors. For example, the vehicle speed may be set based on one or more wheel speeds measured using one or more wheel speed sensors, respectively. The tire-road coefficient of friction may be determined, for example, based on wheel slip. The reference yaw rate module 408 may filter the reference yaw rate before use, such as using a first order transfer function or another suitable filter. In various implementations, the vehicle speed and tire-road coefficient of friction may not be used, and the reference yaw rate module 408 may determine the reference yaw rate based on the steering angle. Further example detail is provided below.

A reference hitch angle module 412 determines a reference (target) hitch angle. The reference hitch angle module 412 may determine the reference hitch angle based on the steering angle and one or more other parameters. The reference hitch angle module 412 may determine the reference hitch angle using one or more equations and/or lookup tables that relate the steering angle and the other parameter(s) to reference hitch angle. Further example detail is provided below.

A constraints module 416 determines one or more constraints (or limits). The constraints may be fixed predetermined values or may be variable. In the example of variables, the constraints module 416 may set one or more of the constraints based on one or more operating parameters of the vehicle 100 and/or the trailer 104.

The actuator control module 320 determines the damping forces for the suspension actuators 304-316, respectively, based on the target torque, (present) hitch angle, the reference yaw rate, the reference hitch angle, and the constraints. The actuator control module 320 may determine the damping forces further based on a present yaw rate of the vehicle 100. The present yaw rate of the vehicle 100 may be, for example, measured using a yaw rate sensor (of the sensors 344). The actuator control module 320 may determine the damping forces using one or more equations and/or lookup tables that relate target torques, reference yaw rates, yaw rates, reference hitch angles, hitch angles, and constraints to damping forces. The actuator control module 320 may determine the damping forces to minimize the difference (error) between the yaw rate and the reference yaw rate and to minimize the difference (error) between the hitch angle and the reference hitch angle. In other words, the actuator control module 320 may determine the damping forces to adjust the yaw rate toward or to the reference yaw rate and adjust the hitch angle toward or to the reference hitch angle.

The actuator control module 320 controls the suspension actuators 304-316 to achieve the damping forces, respectively. The actuator control module 320 may control, for example, hydraulic pressure and/or power applied to the suspension actuators 304-416.

In various implementations, the actuator control module 320 may initiate controlling the damping forces based on the hitch angle when the yaw rate is different than the target yaw rate by at least a predetermined amount. In various implementations, the actuator control module 320 may continuously control the damping forces based on the hitch angle, even when the yaw rate is within the predetermined amount of the target yaw rate.

In various implementations, the actuator control module 320 may set the damping forces using model predictive control (MPC), such as a nonlinear model predictive control (NMPC).

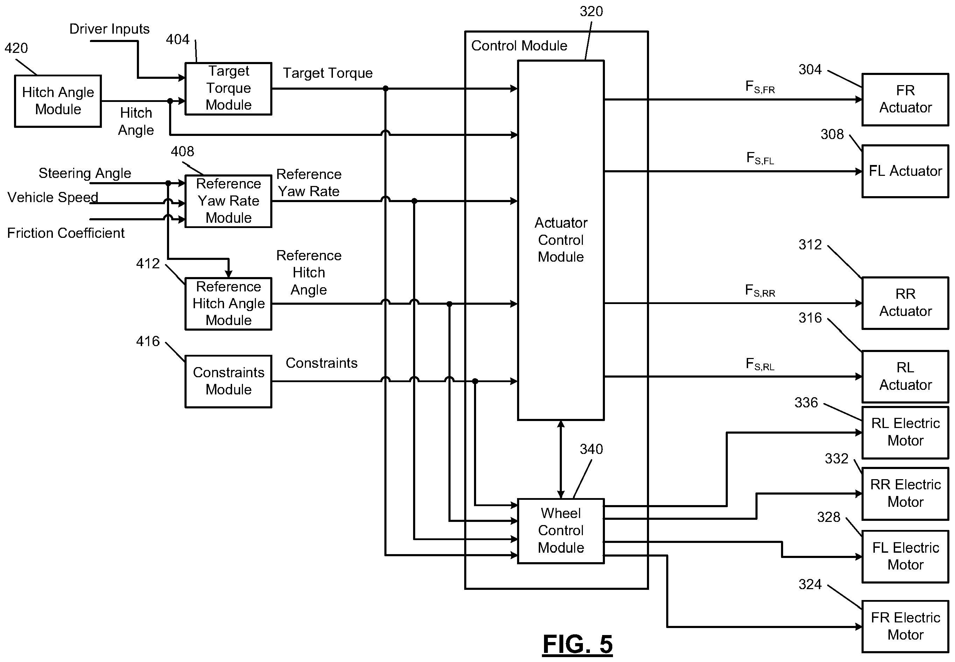

FIG. 5 is a functional block diagram of an example control system. As illustrated in FIG. 5, the wheel control module 340 may determine the torques ($\tau_{m,FR}$, $\tau_{m,FL}$, $\tau_{m,RR}$, $\tau_{m,RL}$) at the wheels, respectively, based on the target torque, (present) hitch angle, the reference yaw rate, the reference hitch angle, and the constraints. The wheel control module 340 may determine the torques further based on the present yaw rate of the vehicle 100. The wheel control module 340 may determine the torques using one or more equations and/or lookup tables that relate target torques, reference yaw rates, yaw rates, reference hitch angles, hitch angles, and constraints to wheel torques. The wheel control module 340 may determine the torques to minimize the difference (error) between the yaw rate and the reference yaw rate and to minimize the difference (error) between the hitch angle and the reference hitch angle. In other words, the wheel control module 340 may determine the torques to adjust the yaw rate toward or to the reference yaw rate and adjust the hitch angle toward or to the reference hitch angle.

The wheel control module 340 controls the motors 324-336 to achieve the torques, respectively. The wheel control module 340 may for example control the power applied to the electric motors 324-336 based on the torques, respectively. The wheel control module 340 may additionally control application of the friction brakes of the wheels based on the torques, respectively. While the example of one motor per wheel is provided, the present application is also applicable to one electric motor for the front axle and one electric motor for the rear axle and to only one electric motor for the front or rear axle. In various implementations, an internal combustion engine may be included, and the wheel control module 340 may additionally or alternatively control torque output of the internal combustion engine based on the torques. In various implementations, the wheel control module 340 may additionally or alternatively control one or more differentials based on the torques.

In various implementations, the wheel control module 340 may initiate controlling the torques based on the hitch angle when the yaw rate is different than the target yaw rate by at least a predetermined amount. In various implementations, the wheel control module 340 may continuously control the torques based on the hitch angle, even when the yaw rate is within the predetermined amount of the target yaw rate.

In various implementations, the actuator control module 320 and the wheel control module 340 may share parameters. For example, the actuator control module 320 may set the damping forces at the wheels based on the torques, respectively, at the wheels. As another example, the wheel control module 340 may set the torques at the wheels based on the damping forces, respectively, at the wheels.

In various implementations, the wheel control module 340 may set the torques using MPC control, such as NMPC control. An example implementation of NMPC control of the wheel torques is discussed further below. An example implementation of NMPC control of the damping forces and the wheel torques is also discussed further below. In various implementations, the wheel control module 340 and the actuator control module 320 may be implemented together within a control module, such as illustrated in FIG. 5.

The driver inputs may be assumed to be constant along the NMPC prediction horizon. The driver inputs may include the steering angle $\delta_w$, the accelerator pedal position *APP*, and the brake pedal position or force *BPP*. Other inputs that may be fixed along the prediction horizon are: i) the towing vehicle 100 longitudinal and lateral accelerations, $a_x$ and $a_y$ that may be used to determine the load transfers (e.g., by the actuator control module); ii) a baseline front-to-total anti-roll moment distribution $f_0^{ar}$; control parameters, e.g., constraints, weights, flags, etc.; iv) the trailer 104 longitudinal and lateral accelerations (which may be estimated) $a_{x,t}$ and $a_{y,t}$. Control of the vehicle yaw rate and hitch angle dynamics adopts the reference variables that define the steady-state cornering condition of the vehicle, for the given driver inputs.

The steady-state reference yaw rate of the vehicle-trailer system $\dot{\psi}_{ref}$ is configured to match a steady-state cornering response of the passive rigid vehicle. $\dot{\psi}_{ref}$ may be stored as nonlinear map (e.g., lookup table), and the reference yaw rate may be determined as function of steering angle $\delta$, vehicle speed V, and tire-road friction coefficient $\mu$. The output of the map may be filtered by the reference yaw rate module 408, such as using a first order transfer function. The dynamic instability of the vehicle-trailer system may be detected by the control module when the actual yaw rate differs from the reference yaw rate by at least a predetermined amount. The map may be based on, for example, a nonlinear quasi-static or dynamic vehicle models and minimize additional key performance criteria such as tire slip power losses or total power losses. In various implementations, the reference yaw rate may be determined by the reference yaw rate module 408 based only on the steering angle.

The reference yaw rate may target the control of the vehicle cornering behavior, but may also account for the trailer presence. In various implementations example, the reference yaw rate module 408 may apply a band pass filter that outputs signals within a predetermined frequency band that are indicative of actual trailer sway. The predetermined frequency band may be, for example, 0.5 Hertz (Hz) to 1.5 Hz or another suitable frequency band. In various implementations, the control module may blend the yaw rate and hitch angle reference contributions when the trailer dynamics when the hitch angle error is greater than a predetermined value. The hitch angle may be measured using a sensor or estimated. In various implementations, the hitch angle may be determined by a hitch angle module 420 based on rigid vehicle equations of motion.

Vehicle roll stability may be preserved by the control module during steering maneuvers by controlling the actuators 304-316 and/or the motors 316-336 to adjust a roll angle toward or to a target roll angle of the sprung masses. The target roll angle may be a predetermined value, such as 1 degree for a lateral acceleration of 5 m/s$^2$ or another suitable value. In various implementations, the control module may control the actuators 304-316 and/or the motors 316-336 to adjust a rollover prevention index RI which depends on roll dynamics and lateral acceleration to less than a predetermined value, such as 0.8 or another suitable value.

Despite being an additional reference state for the vehicle-semitrailer stability, roll angle may not be considered among the target variables in various implementations. The reference yaw rate may target control of the car cornering behavior, whereas the hitch angle dynamics are controlled by targeting the reference hitch angle, $\theta_{ref}$. $\theta_{ref}$ may be determined by the reference hitch angle module 412 as a kinematic hitch angle, i.e., the hitch angle in absence of slip angles. An equation that can be used by the reference hitch angle module 412 to determine the reference hitch angle for a given vehicle speed is:

$$\theta_{ref} = \tan^{-1}\left(\frac{\tan(\delta)\left[l^2 l_t + [c-l_R]\sqrt{\tan(\delta)^2 l^2 [c-l_R]^2 - \tan(\delta)^2 l^2 l_t^2 + l^4}\right]}{l\left[-\tan(\delta)^2 l_t [c-l_R] + \sqrt{\tan(\delta)^2 l^2 [c-l_R]^2 - \tan(\delta)^2 l^2 l_t^2 + l^4}\right]}\right) \quad (1)$$

Details of various parameters are illustrated in FIGs. 1 and 2.

Alternative formulations of the reference hitch angle could be based on its value in quasi-steady-state cornering conditions, mapped in appropriate look-up tables as functions of steering angle, vehicle speed, and tire-road friction coefficient, similarly to what is used for the reference yaw rate. Dynamic instability of the vehicle-trailer combination may be identified when the actual response significantly differs from the reference yaw rate and hitch angle.

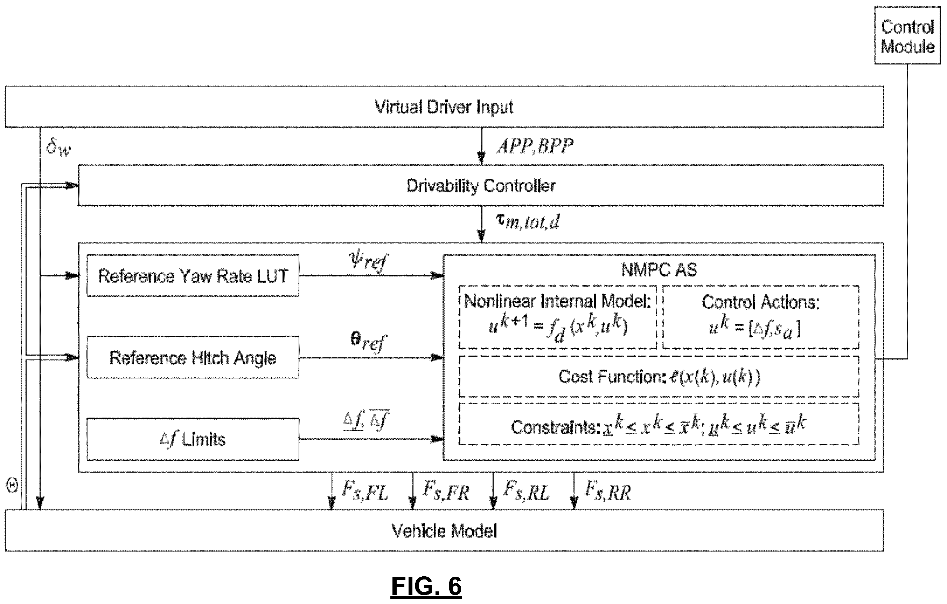

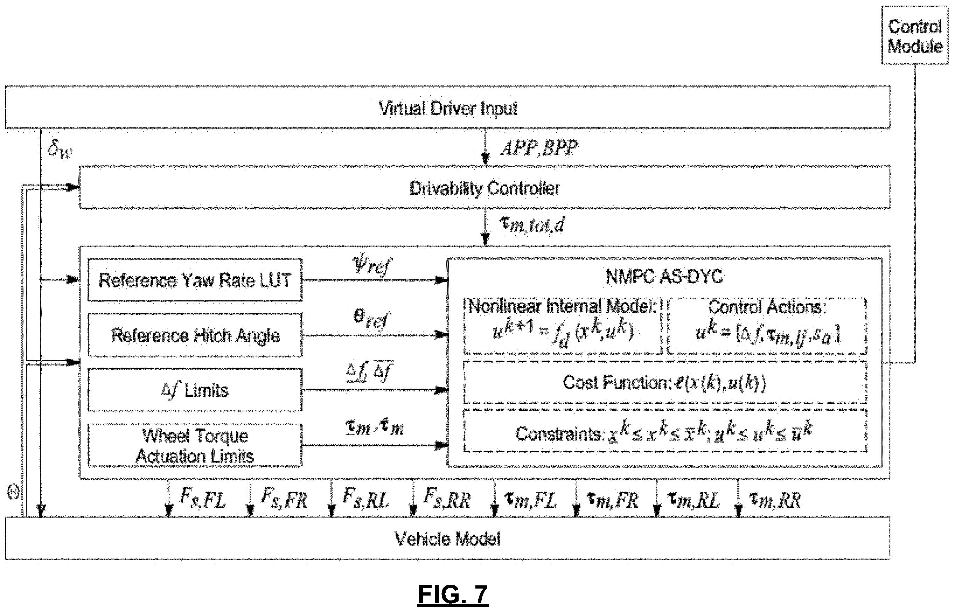

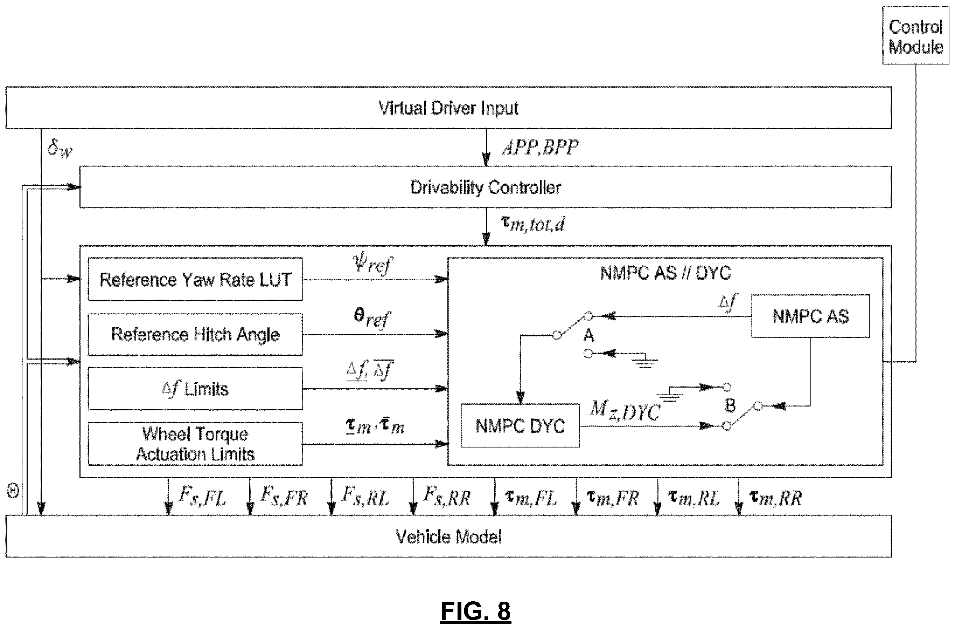

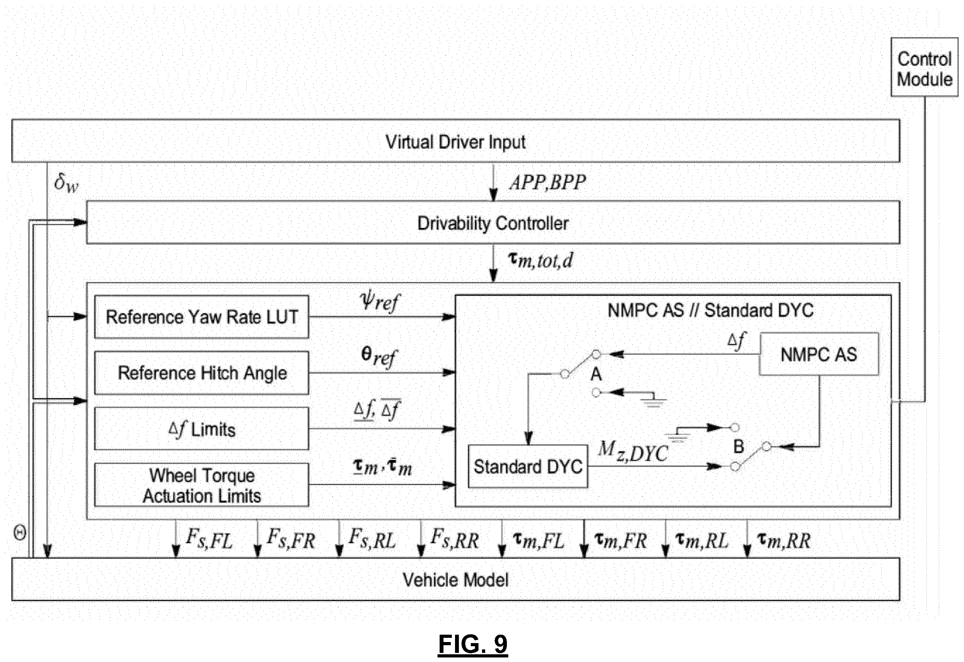

FIGs. 6-9 include functional block diagrams of example implementations of the system of FIG. 4. FIG. 6 includes an example active suspension (AS) configuration. FIGS. 7-9 include example AS plus dynamic yaw control (DYC) configurations. The control inputs for the AS configuration (FIG. 6) are a front-to-total anti-roll moment distribution

variation, $\Delta f$, of the active suspension system, with respect to a predetermined nominal value. In the example of FIG. 7, in addition to the inputs of FIG. 6, the four torques on each wheel are used as control inputs. The control inputs in this example are $\Delta f$, $\tau_{m,FL}$, $\tau_{m,FR}$, $\tau_{m,RL}$, and $\tau_{m,RR}$. In the example of FIG. 8, the standalone AS and DYC for the articulated vehicle run in parallel sharing or not sharing the output control actions with each other. The control inputs for this example are $\Delta f$, $\tau_{m,FL}$, $\tau_{m,FR}$, $\tau_{m,RL}$, and $\tau_{m,RR}$. In the example of FIG. 9, the standalone AS for articulated vehicle and the standalone DYC for the isolated vehicle run in parallel sharing or not sharing the output control actions with each other. The control inputs for this example are $\Delta f$, $\tau_{m,FL}$, $\tau_{m,FR}$, $\tau_{m,RL}$, and $\tau_{m,RR}$.

In the formulations herein, the subscript $i$, with $i = F, R$ indicates the axle, whereas the subscript $j$, with $j = L, R$, indicates the vehicle side. The notation '$(\cdot)$' indicates a time derivative, while '(")' indicates a second order time derivative. The subscript '$t$' indicates forces applied to the vehicle according to the directions of the trailer reference frame. Other variables are the sideslip angle at the *CoG*, $\beta$; the vehicle speed, $V$; and the hitch angle $\theta$, namely the angle between the longitudinal axes of the trailer and the towing vehicle.

The proposed controller internal model, namely the model used by NMPC model of the control module for predicting the system response along the prediction horizon may be based on the following assumptions: motion is planar, and thus the road bank and inclination angles are negligible; heave, roll and pitch dynamics are disregarded; powertrain and braking torque on each corner is known in a first approximation; lateral and longitudinal displacements of the center of gravity caused by the roll and pitch motions are neglected;

The internal model equations of the vehicle-trailer body dynamics of the alternative NMPC configurations may be obtained through a Lagrange method. The vehicle model's degrees of freedom are described by equations 2-5, 9, and 14. FIGs. 6 and 1 and 2 illustrate states and parameters in accordance with their positive sign conventions.

The longitudinal force balance may be described by:

$$M[\dot{v}_x - \dot{\psi}v_y] - m_t l_{F,t}[\ddot{\psi} - \ddot{\theta}]\sin(\theta) - 2m_t l_{F,t}\dot{\psi}\dot{\theta}\cos(\theta)$$

$$+ m_t l_{F,t}\dot{\theta}^2\cos(\theta) + m_t\dot{\psi}^2[c + l_{F,t}\cos(\theta)]$$

$$= [F_{x,FL} + F_{x,FR}]\cos(\delta) - [F_{y,FL} + F_{y,FR}]\sin(\delta) + F_{x,RL}$$

$$+ F_{x,RR} + \sum_{j=L,R}[F_{x,tj}\cos(\theta) + F_{y,tj}\sin(\theta)] - F_{drag}$$

(2)

where M is the mass of the car-trailer system, $F_{x,tj}$ and $F_{y,tj}$ are the semitrailer longitudinal and lateral tire forces, respectively; and $l_{F,t}$ is the trailer *CoG* to the hitch joint distance.

The lateral force balance may be described by:

$$M[\dot{v}_y + \dot{\psi}v_x] - m_t\ddot{\psi}[c + l_{F,t}\cos(\theta)] + m_t l_{F,t}\ddot{\theta}\cos(\theta)$$

$$- m_t l_{F,t}\sin(\theta)[\dot{\psi} - \dot{\theta}]^2$$

$$= [F_{x,FL} + F_{x,FR}]\sin(\delta) + [F_{y,FL} + F_{y,FR}]\cos(\delta)$$

$$+ [F_{y,RL} + F_{y,RR}] + \sum_{j=L,R}[-F_{x,tj}\sin(\theta) + F_{y,tj}\cos(\theta)]$$

(3)

The vehicle yaw moment balance may be described by:

$$J_{1,\theta}\ddot{\psi} - J_{2,\theta}\ddot{\theta} + m_t l_{F,t} c \sin(\theta) \left[\dot{\theta}^2 - 2\dot{\theta}\dot{\psi}\right] - m_t l_{F,t} \sin(\theta) \left[\dot{v}_x - v_y\dot{\psi}\right]$$

$$- m_t \left[\dot{v}_y + v_x\dot{\psi}\right]\left[c + l_{F,t} \cos(\theta)\right]$$

$$= l_F \left\{\left[F_{y,FL} + F_{y,FR}\right]\cos(\delta) + \left[F_{x,FL} + F_{x,FR}\right]\sin(\delta)\right\}$$

$$- l_R \left[F_{y,RL} + F_{y,RR}\right]$$

$$+ \frac{d_F}{2}\left\{\left[F_{y,FL} - F_{y,FR}\right]\sin(\delta) + \left[F_{x,FR} - F_{x,FL}\right]\cos(\delta)\right\}$$

$$+ \frac{d_R}{2}\left[F_{x,RR} - F_{x,RL}\right]$$

$$+ \sum_{j=L,R}\left\{F_{x,tj}\left[c\sin(\theta) - \frac{d_{R,t}}{2}\right] + F_{y,tj}[-c\cos(\theta) - l_t]\right\}$$

$$+ \sum_{\substack{j=L,R \\ i=F,R}} M_{z,ij}$$

(4)

where $d_{R,t}$ is the trailer trackwidth.

An example hitch angle dynamics equation is:

$$J_{3,\theta}\ddot{\theta} - J_{2,\theta}\ddot{\psi} + m_t l_{F,t} \cos(\theta) \left[\dot{v}_y + v_x\dot{\psi}\right]$$

$$+ m_t l_{F,t} \sin(\theta)\left\{\dot{v}_x - \dot{\psi}[v_y - c\dot{\psi}]\right\}$$

$$= \sum_{j=L,R}\left[F_{x,tj}\frac{d_{R,t}}{2} + F_{y,Tj}l_t\right] - \Gamma\dot{\theta}$$

(5)

where $\Gamma\dot{\theta}$ is the Rayleigh dissipation term, expressing any form of damping at the hitch joint; and $J_{1,\theta}$, $J_{2,\theta}$ and $J_{3,\theta}$ are equivalent mass moments of inertia, defined as:

$$J_{1,\theta} = J_z + J_{z,t} + m_t\left[l_{F,t}^2 + c^2 + 2l_{F,t}c\cos(\theta)\right]$$

(6)

$$J_{2,\theta} = J_{z,t} + m_t\left[l_{F,t}^2 + l_{F,t}c\cos(\theta)\right]$$

(7)

$$J_{3,\theta} = J_{z,t} + m_t l_{F,t}^2$$

(8)

where $J_{z,t}$ is the trailer yaw mass moment of inertia.

Moment balance for the wheel $ij$ may be described by

$$J_{w,i}^{eq}\dot{\omega}_{ij} = \tau_{m,ij} - \tau_{b,ij} - R_{l,ij}F_{x,ij} - M_{y,ij} \tag{9}$$

where $J_{w,i}^{eq}$ is the equivalent mass moment of inertia of the front wheels, which is approximated as equal to the polar inertia; $\tau_{m,ij}$ are the wheel motor/powertrain torques; and $\tau_{b,ij}$ are the wheel braking torques. In this example, the Magic Formula or another suitable nonlinear tire model can be used by the control module to calculate the rolling radius, laden radius, rolling resistance, longitudinal force, lateral force, and self-aligning moment of the tires, namely $R_{e,ij}$, $R_{l,ij}$, $M_{y,ij}$, $F_{x,ij}$, $F_{y,ij}$, and $M_{z,ij}$, as functions of the tire slip angle $\alpha_{ij}$, longitudinal slip ratio $\sigma_{x,ij}$, vertical load $F_{z,ij}$.

The longitudinal load transfer and the lateral load transfer may include the anti-roll moment contribution due to the active suspension actuation. Alternative formulations may be used in the example of a semi-active suspension system. The vertical loads may be expressed as:

$$F_{z,Fj} = \frac{1}{2}F_{z,F}^{stat} + \frac{1}{2}\Delta F_{z,F}^{x} + k_1 \Delta F_{z,F}^{y}$$
$$F_{z,Rj} = \frac{1}{2}F_{z,R}^{stat} + \frac{1}{2}\Delta F_{z,R}^{x} + k_1 \Delta F_{z,R}^{y} \qquad k_1 = \begin{cases} -1 & if \quad j = L \\ 1 & if \quad j = R \end{cases}$$

$$F_{z,F}^{stat} = \frac{mgl_R}{l} - \frac{m_t g l_{R,t}}{l_t}\left[\frac{c - l_R}{l}\right]$$
$$F_{z,R}^{stat} = \frac{mgl_F}{l} + \frac{m_t g l_{R,t}}{l_t}\left[\frac{c + l_F}{l}\right]$$

$$\Delta F_{z,F}^{x} = -ma_x \frac{H_{CoG}}{l} - \left[m_t a_{x,t}\cos(\theta) + \frac{m_t a_{y,t}l_{tR}}{l_t}\sin(\theta)\right]\frac{H_{Hitch}}{l} + $$
$$+ \frac{m_t a_{x,t}\left[H_{CoG,t} - H_{Hitch}\right]}{l_t}\left[\frac{c - l_R}{l}\right]$$

$$\Delta F_{z,R}^{x} = ma_x \frac{H_{CoG}}{l} + \left[m_t a_{x,t}\cos(\theta) + \frac{m_t a_{y,t}l_{tR}}{l_t}\sin(\theta)\right]\frac{H_{Hitch}}{l} + $$
$$- \frac{m_t a_{x,t}\left[H_{CoG,t} - H_{Hitch}\right]}{l_t}\left[\frac{c + l_F}{l}\right]$$

$$\Delta F_{z,F}^{y} = \left[ma_y \frac{l_R}{l} + \left[m_t a_{x,t}\sin(\theta) - \frac{m_t a_{y,t}l_{tR}}{l_t}\cos(\theta)\right]\frac{[c - l_R]}{l}\right]\frac{H_{RC}}{d_F}$$
$$+ \frac{M_{AR,F}^{tot}}{d_F}$$

where $H_{CoG}$ is the height of the *CoG*; $H_{RC}$ is the roll axis height at the longitudinal coordinate of the *CoG*. In this example, the total active suspension anti-roll moment on the front and rear axles,        and        , may be determined by the control module as:

rdinate of the $CoG$. In this example, the total active suspension anti-roll moment front and rear axles, $M_{AR,F}^{tot}$ and $M_{AR,R}^{tot}$, may be determined by the control module as

where the passive vehicle anti-roll moment on the i-th axle, $M_{AR,i}^{passive}$ , and the active suspension anti-roll moments, $M_{AR,F}^{AS}$ , include the hitch joint force components contributions, and are computed by the control module as:

$$M_{AR,F}^{passive} = \frac{K_{\varphi,F}}{K_{\varphi,F} + K_{\varphi,R}} \left\{ \left[ 1 - K_{comp} \right] m a_y [H_{CoG} - H_{RC}] \right. \qquad (12)$$

$$\left. - \left[ m_t a_{x,t} \sin(\theta) - \frac{m_t a_{y,t} l_{tR}}{l_t} \cos(\theta) \right] [H_{Hitch} - H_{RC}] \right\}$$

$$M_{AR,F}^{passive} = \frac{K_{\varphi,R}}{K_{\varphi,F} + K_{\varphi,R}} \left\{ \left[ 1 - K_{comp} \right] m a_y [H_{CoG} - H_{RC}] \right.$$

$$\left. - \left[ m_t a_{x,t} \sin(\theta) - \frac{m_t a_{y,t} l_{tR}}{l_t} \cos(\theta) \right] [H_{Hitch} - H_{RC}] \right\}$$

$$M_{AR,F}^{AS} = K_{comp} f m a_y [H_{CoG} - H_{RC}]$$

$$M_{AR,R}^{AS} = K_{comp} [1 - f] m a_y [H_{CoG} - H_{RC}]$$

where $K_{\varphi,i}$ is the roll stiffness of the considered axle, $K_{comp}$ is a factor expressing the level of roll angle compensation of the active suspension actuation, and $f = f_{AR,0} + \Delta f$ is the controllable front-to-total anti-roll moment distribution. The total active suspension anti-roll moment, $M_{AR,F}^{AS} + M_{AR,R}^{AS}$ , may have different formulations, depending on the AS control implementation.

If predetermined values for the suspension stiffness and damping characteristics are known, the passive contribution of the anti-roll moment may depend on the roll dynamics of the rigid vehicle and may be determined by the control module as:

$$M_{AR,\dot{\varphi},i}^{passive} = K_{\dot{\varphi},i} \, \dot{\varphi} \qquad (13)$$

$$M_{AR,\varphi,i}^{passive} = K_{\varphi,i} \varphi$$

where $\varphi$ is the roll angle, $\dot{\varphi}$ is the roll rate; $K_{\dot{\varphi},i}$ is the roll damping coefficient; $M_{AR,\dot{\varphi},i}^{passive}$ is the anti-roll moment due to the passive suspension roll stiffness, and $M_{AR,\dot{\varphi},i}^{passive}$ is the anti-roll moment due to the passive suspension roll damping properties.

This formulation may involve extension of the internal model to involve the equations of motion by an additional degree of freedom, namely the roll dynamics contribution:

$$I_x\ddot{\varphi} = ma_y[H_{CoG} - H_{RC}]\cos(\varphi) + mg[H_{CoG} - H_{RC}]\sin(\varphi) - M_{AR,\varphi,F}^{passive} \quad (14)$$

$$- M_{AR,\varphi,R}^{passive} - M_{AR,\dot{\varphi},F}^{passive} - M_{AR,\dot{\varphi},R}^{passive} - M_{AR,F}^{AS} - M_{AR,R}^{AS}$$

$$+ \frac{m_t g l_{tF}}{l_t}[H_{Hitch} - H_{RC}]\sin(\varphi)$$

$$+ \left[m_t a_{x,t}\sin(\theta) - \frac{m_t a_{y,t} l_{tR}}{l_t}\cos(\theta)\right][H_{Hitch}$$

$$- H_{RC}]\cos(\varphi)$$

where $m_t$ is the mass of the trailer, $l_{tF}$ is the hitch joint to trailer $_{CoG}$ distance, $a_{y,t}$ and $a_{x,t}$ are the acceleration components of the trailer, and $F_y^{j2c}$ depends on the trailer acceleration components, trailer parameters, and trailer hitch angle. In the following, roll dynamics may disregarded, therefore, sensing devices on the trailer may not used, e.g., to measure $\theta$, $a_{y,t}$ and $a_{x,t}$

The lateral slips and longitudinal slips for the towing vehicle may be determined by the control module as:

$$\alpha_{ij} = tan^{-1}\left(\frac{v_y \pm \dot{\psi}l_i}{v_x \mp \frac{d_i}{2}\dot{\psi}}\right) - k_2\delta \quad \begin{cases} k_2 = 1 & if \quad i = F \\ k_2 = 0 & if \quad i = R \end{cases} \quad (15)$$

$$\sigma_{x,ij} = \frac{\omega_{ij}R_{e,ij} - v_{x,ij}}{v_{x,ij}} \quad (16)$$

where $v_{x,ij}$ is the longitudinal component of the peripheral wheel speed.

The lateral load transfer on the trailer may be determined by the control module as:

$$\Delta F_{z,t}^y = \frac{m_t a_{y,t} l_{R,t}}{d_{R,t} l_t}H_{Hitch} - \frac{m_t a_{y,t} H_{CoG,t}}{d_{R,t}} \quad (17)$$

The tire slip ratios $\sigma_{x,tj}$ of the trailer can be neglected or assumed starting from the longitudinal tire forces of the trailer, and the trailer slip angles ($\alpha_{tj}$) may be determined using:

$$\alpha_{tj} = tan^{-1}\left(\frac{v_x \sin(\theta) + v_y \cos(\theta) - c\dot{\psi}\cos(\theta) - l_t[\dot{\psi} - \dot{\theta}]}{v_x \cos - v_y \sin(\theta) + c\dot{\psi}\sin(\theta) - \frac{d_{R,t}}{2}[\dot{\psi} - \dot{\theta}]}\right) \quad (18)$$

In this example, equations 2-5 may be re-arranged through symbolic computation software (MAPLE) into a nonlinear state-space formulation. In the example of a nonlinear optimal control problem formulation, the internal NMPC model may be expressed by the following continuous formulation:

$$\dot{x}(t) = f\big(x(t), u(t)\big) \tag{19}$$

where the state vector $x$ is:

$$x = \begin{bmatrix} v_x & v_y & \dot{\psi} & \dot{\theta} & \theta & \omega_{FL} & \omega_{FR} & \omega_{RL} & \omega_{RR} & \omega_{tL} & \omega_{tR} \end{bmatrix} \tag{20}$$

and the control vector for AS-DYC control may be described by:

$$u = \begin{bmatrix} \Delta f & \tau_{m,FL} & \tau_{m,FR} & \tau_{m,RL} & \tau_{m,RR} \end{bmatrix} \tag{21}$$

where $u_{DYC,ij}$ are the wheel torques at each wheel in this example. In this example the roll dynamics are included into the internal model formulation, the following state vector may be used:

$$x = \begin{bmatrix} v_x & v_y & \dot{\psi} & \dot{\varphi} & \varphi & \dot{\theta} & \theta & \omega_{FL} & \omega_{FR} & \omega_{RL} & \omega_{RR} & \omega_{tL} & \omega_{tR} \end{bmatrix} \tag{22}$$

The control module may minimize the cost function $J$ subject to equality and inequality constraints. The nonlinear optimal control problem may be described in discrete time as:

$$\min_{u} J(x(0), u(\cdot)) := \ell_N\big(x(N)\big) + \sum_{k=0}^{N-1} \ell\big(x(k), u(k)\big) \tag{23}$$
$$s.t.$$
$$x(0) = x_{in}$$
$$x(k+1) = f_d\big(x(k), u(k)\big)$$
$$\underline{x} \leq x(k) \leq \overline{x}$$
$$\underline{x} \leq x(N) \leq \overline{x}$$
$$\underline{u} \leq u(k) \leq \overline{u}$$
$$u(\cdot) : [0, N-1]$$

where $\ell_N(x(N))$ is the terminal cost, $N$ is the number of time steps of the prediction horizon $H_p$, (which can be greater than or equal to the control horizon $H_c$, i.e. $H_p = H_c = NT_s$) with $T_s$ being the sampling time, $k$ indicates the discretization step; $\underline{x}$ and $\overline{x}$ are the lower and upper limits for $x$, $\underline{u}$ and $\overline{u}$ are the lower and upper limits for $u$; $x(k+1) = f_d(x(k),u(k))$ is a discretized model, such as in equation 19. The stage cost function may be defined as a least-squares function and may be described by:

$$ll\big(x(k), u(k)\big) = W_{Q,\Delta\dot{\psi}}\Delta\dot{\psi}^2 + W_{Q,\Delta\theta}\Delta\theta^2 + W_{Q,\Delta\varphi}\Delta\varphi^2 + W_{Q,\Delta\tau_{m,tot}}\Delta\tau_{m,tot}^2 \tag{24}$$

$$+ W_{R,\tau_{m,ij}} \sum \tau_{m,ij}^2 + W_{R,\Delta f}\Delta f^2 + W_{R,s_{\alpha_R}}s_{\alpha_R}^2$$

where $W_{Q,\Delta\dot{\psi}}$, $W_{Q,\Delta\theta}$, $W_{Q,\Delta\varphi}$ and $W_{Q,\Delta\tau_{m,tot}}$ are the cost function weights, respectively prioritizing the tracking of the rigid vehicle reference yaw rate, of the articulation angle, of the roll angle or of the driver torque demand, $W_{R,\tau_{m,ij}}$ and $W_{R,\Delta f}$

are the cost function weights referred to the available actuators used to penalize the control actions, $W_{R,s_{\alpha_R}}$ is the weighting coefficient that may be referred to as rear tire slip angle slack variable. This may be based on the following:

$$\Delta\dot{\psi} = \dot{\psi}_{ref} - \dot{\psi},$$

the yaw rate tracking error;

$$\theta = \theta_{ref} - \theta,$$

the hitch angle tracking error.

In various implementations, trailer sway mitigation may be accounted for by adding a soft constraint on the hitch angle error, $|\Delta\theta| \leq \Delta\theta^{max}[1 + s_{\Delta\theta}]$, where $s_{\Delta\theta} \geq 0$ is the slack variable. Alternatively, the yaw rate tracking and the hitch angle tracking errors may be blended together, $\Delta\dot{\psi}_{\Delta\theta} = K_\theta\Delta\dot{\psi} - W_\theta[1 - K_\theta]\Delta\theta$ where $W_\theta$ is a gain that provides an extra degree of tuning and $K_\theta$ is a weighting factor that modulates the hitch angle error correction as follows:

$$K_\theta = \begin{cases} 1 & \text{if} & \Delta\theta \in [-\Delta\theta_{th}; \Delta\theta_{th}] \\ 1 + \dfrac{K_{\theta,min} - 1}{\Delta\theta_{th} - \Delta\theta^{max}}[\Delta\theta_{th} - |\Delta\theta|] & \text{if} & \Delta\theta \in [-\Delta\theta^{max}; -\Delta\theta_{th}] \cup [\Delta\theta_{th}; \Delta\theta^{max}] \\ K_{\theta,min} & \text{if} & \Delta\theta \notin [-\Delta\theta^{max}; \Delta\theta^{max}] \end{cases} \quad (25)$$

where $\Delta\theta_{th}$, $\Delta\theta^{max}$ (with $\Delta\theta^{max} > \Delta\theta_{th}$) and $K_{\theta,min}$ are tuning parameters.

This may also be based on the following:

$\Delta\varphi = \varphi_{ref} - \varphi$, $\Delta\varphi = RI_{ref} - RI$, the roll angle tracking error and the rollover index (RI) minimization, respectively. Alternatively, rollover prevention may be accounted for by adding a soft constraint on the rollover index through a slack variable, $|RI| \leq RI^{max}[1 + s_{RI}]$, where $s_{RI} \geq 0$ is the slack variable. In various implementations, the contribution of the tracking roll angle error is disregarded. $\Delta\tau_{m,tot}$ may be referred to as a torque demand tracking error at the vehicle level between the driver commands and the controller reference total torque. The slack variables may be used to set the soft constraints.

The following state and control action bounds may be used as constraints (lower and upper limits):

Wheel torque control action constraint, $\underline{\tau}_{m,ij} \leq \tau_{m,ij} \leq \overline{\tau}_{m,ij}$, where $\underline{\tau}_{m,ij}$ and $\overline{\tau}_{m,ij}$ are the minimum and maximum values used to generate the direct yaw moment control action on top of the total traction or braking torque;

The front-to-total anti-roll moment distribution deviation constraint, $\underline{\Delta f} \leq \Delta f \leq \overline{\Delta f}$, where $\underline{\Delta f}$ and $\overline{\Delta f}$ are the minimum and maximum admissible anti-roll front-to-total moment distribution deviation from its nominal value;

Rear tire slip angle constraint to account for vehicle lateral stability, $|\alpha_R| \leq \alpha_R^{max}\left(1 + s_{\alpha_R}\right)$, where $s_{\alpha_R} \geq 0$ is the slack variable; and $\alpha_R^{max}$ is the maximum admissible tire slip angle, i.e. $\alpha_R^{max} = 3 \text{ deg}$.

Further constraints may also be implemented, such as a constraint on the front slip angle of the car, on the tire slip ratios of the car, on the rollover index, and on the hitch angle error through a slack variable as previously discussed.

FIG. 6 shows the schematics of a standalone AS implementation. Here, the driver inputs are *APP, BPP* and $\delta_W$. $\Theta$ represents the vehicle operational parameters measured by sensors and received via a network bus of the vehicle. The driver inputs are converted into the reference yaw rate and torque demand, which together with the reference hitch angle and the actuator physical constraints, are conveyed to the control module as constant inputs in the prediction horizon. In various implementations, NMPC (nonlinear model predictive control) may be used by the control module. The NMPC includes a nonlinear optimal control problem, where the inputs undergo a nonlinear internal model to define the optimal control actions along the prediction horizon. The control actions are defined by minimizing the constrained objective function. The final outputs are the forces of the actuators 304-316 on each corner of the vehicle.

FIG. 7 is an example of an NMPC AS-DYC implementation, where DYC is a torque-vectoring actuation strategy involving control of the electric motors 324-336. Here, physical constraints of the motors are an additional input with respect to the standalone AS implementation of FIG. 6. Moreover, the final outputs of the nonlinear optimal control problem of the example of FIG. 7 are the vertical forces for the actuators 304-316 and the wheel torques for the electric motors 324-336.

Parallel or independent control of the actuators 304-316 and the wheel torques for the electric motors 324-336 may be performed. For example, an NMPC AS // DYC implementation with and without communication between the actuator and motor controls is illustrated in FIG. 8. In this example, a standalone AS NMPC implementation (e.g., FIG. 6) with an articulated vehicle internal model runs in parallel to a NMPC DYC implementation with an internal model formulation resembling NMPC AS, namely with the hitch angle dynamics to account for the trailer, represented by equations 19-21 and 23. The two subsystems (actuator and motor controls) run independently either sharing the information of their respective control actions which are taken into account as additional inputs by the other (with communication) or without sharing the information of their respective control actions with each other.

FIG. 9 includes an example NMPC AS // Standard DYC implementation with and without communication between the actuator and motor controls, where a standalone AS NMPC implementation (e.g., FIG. 6) with an articulated vehicle internal model in parallel to a standard NMPC DYC implementation with a rigid vehicle internal model, calibrated for an isolated vehicle. Here, the same communication options may be enabled or disabled. In FIGS. 8 and 9, where the switches A and B enable or disable the communication between the two controls running in parallel.

The NMPC can be implemented on a software environment for automatic control and dynamic optimization. The following may be used: Gauss Newton Hessian approximation, multiple shooting discretization, a qpOASES solver, a number of optimization steps may be set equal to 2, a discretization time of the internal models may be set to 5 ms (this may ensures their numerical stability without significantly affecting the computational time), for the integrator types and orders 2nd order Implicit Runge Kutta (IRK-GL2) for the controls based on the articulated vehicle and 4th order Implicit Runge Kutta (IRK-GL4) for DYC based on the rigid vehicle model, sampling time for each articulated vehicle model may be 35 ms, while the sampling time for DYC implementation may be 15ms. Example implementation settings are summarized in the following table with measured variables coming from the vehicle.

TABLE 1
EXAMPLE OF IMPLEMENTED CONTROLLER SETTINGS

| Actuation | Integrator | $t_d$ (ms) | $T_s$ (ms) |
|---|---|---|---|
| Standard DYC | IRK-GL4 | 5 | 15 |
| AS | IRK-GL2 | 5 | 35 |
| DYC | IRK-GL2 | 5 | 35 |
| AS-DYC | IRK-GL2 | 5 | 35 |

Testing proved that these parametrizations are a good compromise between performance and computational efficiency. The present application involves use of active suspension system on the towing vehicle to limit the trailer sway with, for example, a nonlinear model predictive control (NMPC) on an articulated vehicle model that includes the trailer parameters and dynamics. Additionally, the present application involves use of the active suspension and direct yaw control on the towing vehicle to preserve the articulated vehicle stability and to limit the trailer sway with nonlinear model predictive control coordination based on an articulated vehicle model which includes the trailer parameters and dynamics. Additionally, the present application involves use of active suspension and direct yaw moment control coordination with two parallel NMPC configuration based on an articulated vehicle model (or isolated vehicle model for the case of the Standard DYC) as an alternative in preserving the articulated vehicle stability and to limit the trailer sway.

The control described herein stabilizes the vehicle-trailer system as opposed to the passive vehicle. The active suspension control NMPC AS effectively tracks the towing vehicle reference yaw rate and tracks and limits the hitch angle error and the trailer roll angle. AS plus DYC implementation can further improve the yaw and hitch damping capability relative to only AS control. Moreover, the trailer roll angle is further limited.

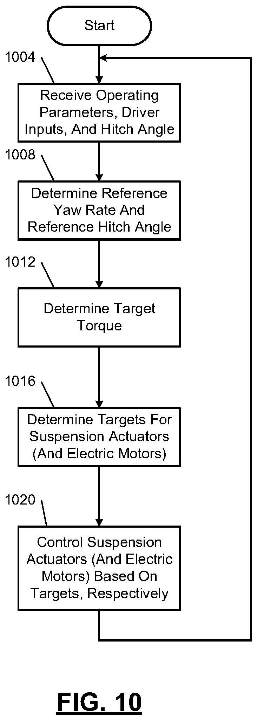

FIG. 10 is a flowchart depicting an example method of controlling one or more vehicle actuators based on hitch angle of the trailer 104. Control begins with 1004 where the driver inputs, the hitch angle, and other vehicle operating parameters are received

At 1008, the reference yaw rate module 408 determines the reference yaw rate based on the steering angle, the vehicle speed, and the tire-road coefficient of friction. The reference hitch angle module 412 also determines the reference hitch angle at 1012. At 1012, the target torque module 404 determines the target torque based on the driver inputs and the hitch angle.

At 1016, the actuator control module 320 determines target forces for the suspension actuators 304-316, respectively, based on the hitch angle, the reference hitch angle, the target torque, the reference yaw rate, and the yaw rate, such as using NMPC control. The actuator control module 320 may set the target forces, for example, to minimize the difference (error) between the hitch angle and the reference hitch angle and to minimize the difference (error) between the yaw rate and the reference yaw rate.

Also at 1016, the wheel control module 340 may determines target torques for the motors 324-336, respectively, based on the hitch angle, the reference hitch angle, the target torque, the reference yaw rate, and the yaw rate, such as using NMPC control. The wheel control module 340 may set the target torques, for example, to minimize the difference (error) between the hitch angle and the reference hitch angle and to minimize the difference (error) between the yaw rate and the reference yaw rate. In various implementations, the wheel control module 340 may determine the target torques based on the target forces and/or determine the target forces based on the target torques.

At 1020, the actuator control module 320 controls the suspension actuators 304-316 to achieve the target (vertical) forces, respectively. The actuator control module 320 may, for example, apply power or hydraulic fluid to the suspension actuators 304-326 based on the target forces, respectively. The wheel control module 340 may also apply power to the electric motors 328-336 to achieve the target torques, respectively. Control returns to 1004 for a next control loop.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements. As used herein, the phrase at least one of A, B, and C should be construed to mean a logical (A OR B OR C), using a non-exclusive logical OR, and should not be construed to mean "at least one of A, at least one of B, and at least one of C."

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation) (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Javascript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

**Claims**

1. A trailer sway control system for a vehicle, comprising:

   a front left active suspension actuator associated with a front left wheel of the vehicle;
   a front right active suspension actuator associated with a front right wheel of the vehicle;
   a rear left active suspension actuator associated with a rear left wheel of the vehicle;
   a rear right active suspension actuator associated with a rear right wheel of the vehicle;
   an actuator control module configured to:

      based on a hitch angle between (a) a first longitudinal axis of a trailer hitched to the vehicle and (b) a second longitudinal axis of the vehicle, determine target vertical forces for the front left active suspension actuator, the front right active suspension actuator, the rear left active suspension actuator, and the rear right active suspension actuator, respectively; and
      selectively adjust the front left active suspension actuator, the front right active suspension actuator, the rear left active suspension actuator, and the rear right active suspension actuator based on the target vertical forces, respectively.

2. The trailer sway control system of claim 1 wherein the actuator control module is configured to determine the target vertical forces based on minimizing a difference between the hitch angle and a reference hitch angle.

3. The trailer sway control system of claim 2 further comprising a reference hitch angle module configured to set the reference hitch angle based on a steering angle of the vehicle.

4. The trailer sway control system of claim 1 wherein the actuator control module is configured to determine the target vertical forces further based on a yaw rate of the vehicle.

5. The trailer sway control system of claim 4 wherein the actuator control module is configured to determine the target vertical forces based on minimizing a difference between the yaw rate and a reference yaw rate.

6. The trailer sway control system of claim 5 further comprising a reference yaw rate module configured to set the reference yaw rate based on a steering angle of the vehicle.

7. The trailer sway control system of claim 6 wherein the reference yaw rate module is configured to set the reference yaw rate further based on a vehicle speed.

8. The trailer sway control system of claim 1 further comprising:

a front left electric motor configured to output torque to the front left wheel of the vehicle;
a front right electric motor configured to output torque to the front right wheel of the vehicle;
a rear left electric motor configured to output torque to the rear left wheel of the vehicle;
a rear right electric motor configured to output torque to the rear right wheel of the vehicle; and
a wheel control module configured to:

based on the hitch angle, determine target torque outputs of the front left electric motor, the front right electric motor, the rear left electric motor, and the rear right electric motor, respectively; and
selectively adjust the front left electric motor, the front right electric motor, the rear left electric motor, and the rear right electric motor based on the target torque outputs, respectively.

9. The trailer sway control system of claim 8 wherein the wheel control module is configured to determine the target torque outputs further based on the target vertical forces.

10. The trailer sway control system of claim 8 wherein the actuator control module is configured to determine the target vertical forces further based on the target torque outputs.

11. The trailer sway control system of claim 1 further comprising:

a front electric motor configured to output torque to front wheels of the vehicle;
a rear electric motor configured to output torque to front wheels of the vehicle; and
a wheel control module configured to:

based on the hitch angle, determine target torque outputs of the front and rear electric motors, respectively; and
selectively adjust the front and rear electric motors based on the target torque outputs, respectively.

12. The trailer sway control system of claim 1 further comprising:

an electric motor configured to output torque two or more wheels of the vehicle; and
a wheel control module configured to:

based on the hitch angle, determine a target torque of the electric motor; and
selectively adjust the electric motor based on the target torque.

13. A trailer sway control method for a vehicle, comprising:

based on a hitch angle between (a) a first longitudinal axis of a trailer hitched to the vehicle and (b) a second longitudinal axis of the vehicle, determining target vertical forces for a front left active suspension actuator, a front right active suspension actuator, a rear left active suspension actuator, and a rear right active suspension actuator, respectively, of the vehicle,
the front right active suspension actuator associated with a front right wheel of the vehicle, the front left active suspension actuator associated with a front left wheel of the vehicle, the rear left active suspension actuator associated with a rear left wheel of the vehicle, and the rear right active suspension actuator associated with a rear right wheel of the vehicle; and
selectively adjusting the front left active suspension actuator, the front right active suspension actuator, the rear left active suspension actuator, and the rear right active suspension actuator based on the target vertical forces, respectively.

14. The trailer sway control method of claim 13 wherein determining the target vertical forces includes determining the target vertical forces based on minimizing a difference between the hitch angle and a reference hitch angle.

**15.** The trailer sway control method of claim 14 further comprising setting the reference hitch angle based on a steering angle of the vehicle.

**FIG. 1**

**FIG. 2**

**FIG. 3**

EP 4 306 342 A1

EP 4 306 342 A1

**FIG. 4**

**FIG. 5**

EP 4 306 342 A1

**FIG. 6**

EP 4 306 342 A1

EP 4 306 342 A1

**FIG. 7**

**FIG. 8**

**FIG. 9**

```
                        ┌─────────────┐
                        │    Start    │
                        └──────┬──────┘
                               │
1004 ─┐                        ▼                          ◄────────┐
      ┌──────────────────────────────┐                            │
      │      Receive Operating       │                            │
      │      Parameters, Driver      │                            │
      │   Inputs, And Hitch Angle    │                            │
      └──────────────┬───────────────┘                            │
1008 ─┐              │                                            │
      ┌──────────────▼───────────────┐                            │
      │      Determine Reference     │                            │
      │        Yaw Rate And          │                            │
      │    Reference Hitch Angle     │                            │
      └──────────────┬───────────────┘                            │
1012 ─┐              │                                            │
      ┌──────────────▼───────────────┐                            │
      │      Determine Target        │                            │
      │          Torque              │                            │
      └──────────────┬───────────────┘                            │
1016 ─┐              │                                            │
      ┌──────────────▼───────────────┐                            │
      │    Determine Targets For     │                            │
      │    Suspension Actuators      │                            │
      │    (And Electric Motors)     │                            │
      └──────────────┬───────────────┘                            │
1020 ─┐              │                                            │
      ┌──────────────▼───────────────┐                            │
      │    Control Suspension        │                            │
      │   Actuators (And Electric    │                            │
      │    Motors) Based On          │                            │
      │   Targets, Respectively      │                            │
      └──────────────┬───────────────┘                            │
                     └──────────────────────────────────────────┘
```

## FIG. 10

Europäisches
Patentamt

European
Patent Office

Office européen
des brevets

# EUROPEAN SEARCH REPORT

Application Number

EP 23 18 2787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/211277 A1 (CRAIG WILLIAM C [US] ET AL) 19 August 2010 (2010-08-19) * paragraphs [0015], [0017], [0030] – [0034], [0050]; figures * | 1-15 | INV. B60G17/016 B60G17/0195 B60D1/32 B60T8/17 B60W30/02 |
| X | US 8 010 252 B2 (FORD GLOBAL TECH [US]) 30 August 2011 (2011-08-30) * column 4, lines 25-28; figures * * column 14, line 57 – column 15, line 18 * * column 15, lines 40-54 * | 1-15 | |
| A | ZANCHETTA MATTIA ET AL: "Trailer control through vehicle yaw moment control: Theoretical analysis and experimental assessment", MECHATRONICS, PERGAMON PRESS, OXFORD, GB, vol. 64, 18 November 2019 (2019-11-18), XP085928765, ISSN: 0957-4158, DOI: 10.1016/J.MECHATRONICS.2019.102282 [retrieved on 2019-11-18] * the whole document * | 1-15 | |
| A | US 2009/271078 A1 (DICKINSON MIKE [US]) 29 October 2009 (2009-10-29) * paragraphs [0004], [0006], [0029]; figures * | 1-15 | TECHNICAL FIELDS SEARCHED (IPC) B60G B60D B60T |

The present search report has been drawn up for all claims

| Place of search | Date of completion of the search | Examiner |
|---|---|---|
| The Hague | 15 November 2023 | Cavallo, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 2787

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2023

| Patent document cited in search report | | Publication date | Patent family member(s) | | Publication date |
|---|---|---|---|---|---|
| US 2010211277 | A1 | 19-08-2010 | NONE | | |
| US 8010252 | B2 | 30-08-2011 | CN 101402363 | A | 08-04-2009 |
| | | | EP 2045155 | A1 | 08-04-2009 |
| | | | US 2009093928 | A1 | 09-04-2009 |
| | | | US 2011257860 | A1 | 20-10-2011 |
| US 2009271078 | A1 | 29-10-2009 | NONE | | |

EPO FORM P0459

For more details about this annex : see Official Journal of the European Patent Office, No. 12/82